# EUROPÄISCHE PATENTANMELDUNG

(11) **EP 2 351 801 A1**
(43) Veröffentlichungstag der Anmeldung: **03.08.2011**
(21) Anmeldenummer: 11000175.7
(22) Anmeldetag: 12.01.2011
(51) Int. Cl.: C09D 123/02, C09D 123/16, C08K 5/101, C08K 5/103, C09D 11/00, C09D 127/02

(54) **Wässrige Dispersionsfarben enthaltend Milchsäureester als Filmbildemittel**

(30) Priorität: 28.01.2010 DE 102010005973
(71) Anmelder: Clariant International Ltd., 4132 Muttenz 1 (CH)
(72) Erfinder: Ahrens, Hendrik, 65830 Kriftel (DE); Morschhäuser, Roman Dr., 55122 Mainz (DE)
(74) Vertreter: Mikulecky, Klaus

(57) **Zusammenfassung**

Gegenstand der Erfindung sind Dispersionsfarben, enthaltend Wasser und
(A) mindestens eine Polymerdispersion, welche Homo- oder Copolymere von olefinisch ungesättigten Monomeren umfasst,
(B) mindestens ein anorganisches Pigment,
(C) mindestens eine Verbindung der Formel (I)

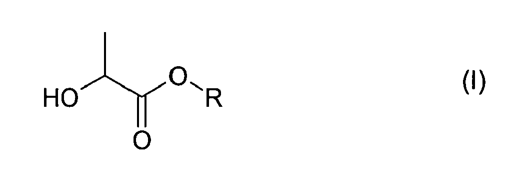

worin R ein Kohlenwasserstoffrest mit 6 bis 30 Kohlenstoffatomen ist.

## Beschreibung

Gegenstand der vorliegenden Erfindung sind wässrige Dispersionsfarben, die Milchsäureester als Filmbildehilfsmittel enthalten, sowie die Verwendung der Milchsäureester als Filmbildehilfsmittel für Dispersionsfarben.

Wässrige Dispersionsfarben enthalten Polymerdispersionen, die nach dem Trocknen und Verdampfen der flüchtigen Komponenten, insbesondere Wasser, einen Film ausbilden und farbige oder weiße Pigmente, Füllstoffe und Additive im Polymerfilm einschließen. Zum Senken der Mindesttilmbildetemperatur werden den Dispersionsfarben Filmbildehilfsmittel zugesetzt, welche es ermöglichen, die Dispersionsfarben bei Temperaturen unterhalb von 20 °C, vorzugsweise bei Temperaturen bis zu 5 °C aufzubringen. Filmbildehilfsmittel finden daher Verwendung in Außenanstrichstoffen.

WO-0179140 A1 beschreibt wässrige Beschichtungsstoffe, die neben dem polymeren Filmbildner noch Filmbildehilfsmittel wie z. B. Testbenzin, Butylglykol, Butyldiglykol, Butyldipropylenglykol und Butyltripropylenglykol enthalten können.

US-2 218 237 A beschreibt Diethylenglykolbenzoat als Filmbildehilfsmittel für Polyvinylacetat-Harze.

US-3 091 632 A und US-3 312 652 A beschreiben die Synthese und Anwendung von Trimethylpentan-1,3-diol monoisobutyrat als Filmbildehilfsmittel für Dispersionsfarben. Diese Dispersionsfarben enthalten Polymere aus Methacrylsäure und Acrylsäureestern oder Polyvinylacetate.

US-4 435 534 A beschreibt Diethylenglykolbenzoat und -toluat als Filmbildehilfsmittel für Acrylatpolymere in Beschichtungsstoffen.

US-5 236 987 A beschreibt Isodecylbenzoat als Weichmacher und Filmbildehilfsmittel für Polyvinylchlorid-Plastisole.

US-2 003 204 003 A1 beschreibt C₁ bis C₆-Monoalkyl und -Dialkylether von Polyalkylenglykolen als Filmbildehilfsmittel für Styrol-, n-Butylacrylat- und Methylmethacrylatpolymere. Beispiel für die genannte Substanzklasse sind Diethylenmonobutylether und Diethylenglykolmonoethylether.

US-4 525 512 A beschreibt die Verwendung von Mono- und Dicarbonsäureestern von Alkyldiglykolethern als Filmbildehilfsmittel für Polymerdispersionen enthaltende Dispersionsfarben. Beispiele der beschriebenen Verbindungen sind Ester der Propionsäure, Oxalsäure, Malonsäure und Bernsteinsäure mit Methyldiethylenglykolether, Butyldiethylenglykolether oder Methyldipropylenglykolether.

WO-0056823 A beschreibt die Verwendung von Monoethylenglykol und Monopropylenglykolmonooleat als Filmbildehilfsmittel für Polymere aus Acrylsäure und Methacrylsäureestern, Vinylacetat und Styrol in Dispersionsfarben.

WO-2005026249 A1 beschreibt Isononylbenzoat als Filmbildehilfsmittel für Anstrichstoffe und Klebstoffe.

Aufgabe der vorliegenden Erfindung war es, als Filmbildehilfsmittel wirksame Verbindungen zu finden, die die Mindestfilmbildetemperatur von Polymerdispersionen ausreichend senken, um Dispersionsfarben, welche Polymerdispersionen enthalten, bei Temperaturen unterhalb von 20 °C, vorzugsweise bei Temperaturen bis zu 5 °C aufbringen zu können. Die als Filmbildehilfsmittel wirksamen Verbindungen sollen nach Möglichkeit keinen unangenehmen Geruch aufweisen. Sie sollen das Deckvermögen der Dispersionsfarben nicht verschlechtern. Sie sollen deren Viskosität nicht deutlich, beispielsweise nicht um mehr als 10 %, absenken. Sie sollen deren Nassabriebfestigkeit möglichst wenig verschlechtern. Gleichzeitig sollen die Filmbildehilfsmittel einen möglichst hohen Siedepunkt aufweisen. Besonders bevorzugt ist ein Siedepunkt von > 250 °C. Nach der Richtlinie 2004/42/EG des Europäischen Parlamentes über die Begrenzung der Emissionen flüchtiger organischer Verbindungen wird die Verwendung von Substanzen mit einem

Siedepunkt von < 250 °C eingeschränkt.

Überraschenderweise wurde gefunden, dass Milchsäureester monovalenter Alkohole diese Aufgabe erfüllen.

Gegenstand der Erfindung sind daher Dispersionsfarben, enthaltend Wasser und
(A) mindestens eine Polymerdispersion, welche Homo- oder Copolymere von olefinisch ungesättigten Monomeren umfasst, und
(B) mindestens ein anorganisches Pigment, und
(C) mindestens eine Verbindung der Formel (I) 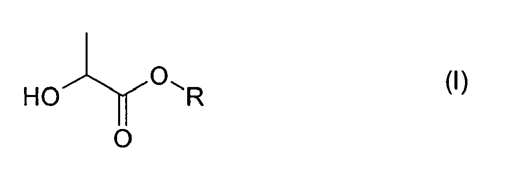 worin R ein Kohlenwasserstoffrest mit 6 bis 30 Kohlenstoffatomen ist.

Weiterer Gegenstand der Erfindung ist die Verwendung einer Verbindung der Formel (I) 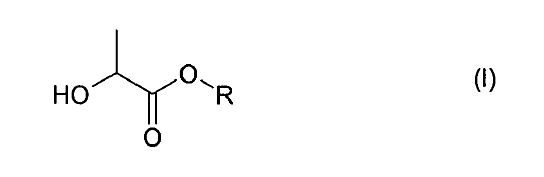 worin R ein Kohlenwasserstoffrest mit 6 bis 30 Kohlenstoffatomen ist, als Filmbildehilfsmittel für wässrige Dispersionsfarben, welche
(A) mindestens eine Polymerdispersion, welche Homo- oder Copolymere von olefinisch ungesättigten Monomeren umfasst, und
(B) mindestens ein anorganisches Pigment, enthalten.

Ein weiterer Gegenstand der Erfindung ist ein Verfahren zur Erzeugung eines Films auf einer Oberfläche, indem man auf die Oberfläche eine Zusammensetzung aufträgt, die Wasser und
(A) mindestens eine Polymerdispersion, welche Homo- oder Copolymere von olefinisch ungesättigten Monomeren umfasst, und
(B) mindestens ein anorganisches Pigment, und
(C) mindestens eine Verbindung der Formel (I) enthält.

In einer bevorzugten Ausführungsform enthalten die erfindungsgemäßen Dispersionsfarben als Bestandteil (D) übliche, für Dispersionsfarben verwendete Hilfsstoffe ausgewählt aus der Gruppe bestehend aus Netzmitteln, Dispergiermitteln, Entschäumern, Rheologieadditiven, Bioziden, Fungiziden, Algiziden, Puffersubstanzen wie Natronlauge, Ammoniaklösung, Aminen wie 2-Amino-2-methyl-1-propanol, Säuren wie Schwefelsäure, Salzsäure und Essigsäure.

In einer weiteren bevorzugten Ausführungsform enthalten die erfindungsgemäßen Dispersionsfarben als Bestandteil (E) Zusatzstoffe ausgewählt aus der Gruppe bestehend aus anorganischen und organischen Buntpigmenten, Rußpigmenten, Füllstoffen, Silikonharzen, Kaliwasserglas oder Alkydharzdispersionen.

Die erfindungsgemäßen Dispersionsfarben enthalten
vorzugsweise 1 bis 95 Gew.-% (A), insbesondere 2 bis 87 Gew.-% (A),
speziell 5 bis 50 Gew.-% (A),
vorzugsweise 1 bis 70 Gew.-% (B), insbesondere 2 bis 50 Gew.-% (B),
vorzugsweise 0,01 bis 10 Gew.-% (C), insbesondere 0,1 bis 2 Gew.-% (C),
vorzugsweise 0,01 bis 10 Gew.-% (D), insbesondere 0,1 bis 2 Gew.-% (D) und
vorzugsweise 1 bis 70 Gew.-% (E), insbesondere 2 bis 50 Gew.-% (E).

Vorzugsweise enthalten die erfindungsgemäßen Dispersionsfarben Wasser ad 100 Gew.-%. In einer weiteren bevorzugten Ausführungsform liegt der Wassergehalt bei mindestens 8 Gew.-%, insbesondere mindestens 10 Gew.-%.

Überraschenderweise wurde gefunden, dass die Verbindungen der Formel (I) die Filmbildetemperatur von Polymerdispersionen (A) in erfindungsgemäßen Dispersionsfarben senken.

Als Komponente (A) eignen sich Polymerdispersionen auf Basis ungesättigter Monomere. Bevorzugte olefinisch ungesättigte Monomere sind beispielsweise
- Vinylmonomere, wie Carbonsäureester des Vinylalkohols, beispielsweise Vinylacetat, Vinylpropionat, Vinylether der Isononansäure oder der Isodecansäure,
- Arylsubstituierte Olefine, wie Styrol und Stilben
- olefinisch ungesättigte Carbonsäureester, wie Methylacrylat, Ethylacrylat, Propylacrylat, n-Butylacrylat, i-Butylacrylat, Pentylacrylat, Hexylacrylat, 2-Ethylhexylacrylat, Hydroxyethylacrylat sowie die entsprechenden Methacrylsäureester,
- olefinisch ungesättigte Dicarbonsäureester, wie Dimethylmaleinat, Diethylmaleinat, Dipropylmaleinat, Dibutylmaleinat, Dipentylmaleinat, Dihexylmaleinat und Di-2-ethylhexylmaleinat,
- olefinisch ungesättigte Carbonsäuren und Dicarbonsäuren, wie Acrylsäure, Methacrylsäure, Itaconsäure, Maleinsäure und Fumarsäure und ihre Natrium-, Kalium- und Ammoniumsalze,
- olefinisch ungesättigte Sulfonsäuren und Phosphonsäuren und ihre Alkali- und Ammoniumsalze, wie Acrylamidomethylpropansulfonsäure und ihre Alkali- und Ammonium-, Alkylammonium und Hydroxyalkylammoniumsalze, Allylsulfonsäure und ihre Alkali- und Ammoniumsalze, Acryloyloxethylphosphonsäure und ihre Ammonium- und Alkalisalze sowie die entsprechenden Methacrylsäurederivate,
- olefinisch ungesättigte Amine, Ammoniumsalze, Nitrile und Amide, wie Dimethylaminoethylacrylat, Acryloyloxethyltrimethylammoniumhalide, Acrylnitril, N-Methylacrylamid, N-Ethylacrylamid, N-Propylacrylamid, N-Methylolacrylamid sowie die entsprechenden Methacrylsäurederivate und Vinylmethylacetamid.

In einer bevorzugten Ausführungsform werden die oben genannten Monomere zur Herstellung der Polymerdispersion mit weiteren Comonomeren, vorzugsweise Olefinen oder halogenierten Olefinen mit 2 bis 8 Kohlenstoffatomen wie z. B. Ethylen, Propen, Buten, Penten, 1,3-Butadien, Chloropren, Vinylchlorid, Vinylidenchlorid, Vinylidenfluorid und Tetrafluorethylen polymerisiert.

Als Komponente (B) eignen sich anorganische Pigmente wie beispielsweise Titandioxide, Calciumcarbonate, Talkum, Kaolin, Bariumsulfate, Zinksulfide, Zinkoxide. Bevorzugt werden auch Mischungen der genannten anorganischen Pigmente verwendet. Eine besonders bevorzugte Mischung anorganischer Pigmente enthält Titandioxid, Calciumcarbonat, Talkum und Kaolin.

Bei Komponente (C) handelt es sich um Ester der Milchsäure mit aliphatischen, aromatischen oder alicyclischen, linearen oder verzweigten, gesättigten oder ungesättigten Alkoholen mit 6 bis 30 Kohlenstoffatomen. R ist somit ein aliphatischer, linearer oder verzweigter, gesättigter oder ungesättigter, aromatischer oder alicyclischer Kohlenwasserstoffrest mit 6 bis 30 Kohlenstoffatomen. Diese Milchsäureester werden entweder in reiner, aufbereiteter Form verwendet, oder sie enthalten als Nebenbestandteile nicht umgesetzte Alkohole, Milchsäure, und Dimilchsäureester und/oder Polymilchsäureester der Formel (II) 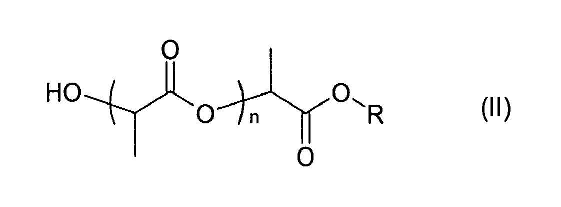 worin n eine Zahl von 1 bis 5 und R ein aliphatischer, linearer oder verzweigter, gesättigter oder ungesättigter, aromatischer oder alicyclischer Kohlenwasserstoffrest mit 6 bis 30 Kohlenstoffatomen ist.

Die Milchsäureester können auch als Mischester von Alkoholen mit verschiedenen Kohlenstoffketten vorliegen, z. B. in Form von Mischungen von C₁₀-C₁₂-Alkanolen oder C₁₃-C₁₅-Alkanolen.

Eine bevorzugte Ausführungsform der Erfindung verwendet Milchsäureester mit einem Siedepunkt von > 250 °C, die keine zu leichtflüchtigen organischen Verbindungen zählende Komponenten (volatile organic component, VOC) enthalten. Der VOC-Gehalt von Dispersionsfarben wird nach der Prüfmethode ISO 11890-2 gemessen, wobei die Probe in einem Gaschromatographen verdampft wird und die flüchtigen Anteile gegen Tetradekan oder Diethyladipat als Markersubstanz erfasst werden. Die für diese besondere Ausführungsform geeigneten Milchsäureester haben daher einen Siedepunkt von > 250 °C und enthalten Alkylreste mit linearen oder verzweigten Kohlenstoffketten von 10 bis 18 C-Atomen.

Da auch freie und nicht umgesetzte Alkohole den VOC-Gehalt erhöhen können, werden für die Herstellung der Milchsäureester in einer besonders bevorzugten Ausführungsform Alkohole R-OH verwendet, die einen Siedepunkt von > 250 °C aufweisen. Geeignete Alkohole sind Fettalkohole mit einer Kohlenstoffkette von 12 bis 22 Kohlenstoffatomen, beispielsweise

| Alkanol | Siedepunkt [°C] |
|---|---|
| Laurylalkohol | 261 |
| Isotridecanol, technisch | 254 - 264 |
| Myristylalkohol | 289 - 291 |
| Cetylalkohol | 344 |
| Stearylalkohol | 336 |

In einer weiteren bevorzugten Ausführungsform der Erfindung werden synthetische, stark verzweigte Oxoalkohole für die Herstellung der erfindungsgemäßen Milchsäureester verwendet. Besonders geeignet sind Mischungen von Oxoalkoholen mit 10 bis 18 Kohlenstoffatomen, die mindestens 10 % Alkohole mit einem tertiären Kohlenstoffatom pro Kohlenstoffkette enthalten.

In einer weiteren bevorzugten Ausführungsform enthält die Kohlenstoffkette R des Milchsäureesters mindestens ein tertiäres Kohlenstoffatom.

In einer weiteren bevorzugten Ausführungsform enthält die Kohlenstoffkette R des Milchsäureesters 2 bis 4 tertiäre Kohlenstoffatome.

Neben gesättigten Milchsäureestern werden in einer weiteren bevorzugten Ausführungsform Milchsäureester von einfach oder mehrfach ungesättigten Fettalkoholen, beispielsweise Milchsäureester des Oleylalkohols, Linolalkohols oder

Linolenolalkohols verwendet.

In einer weiteren bevorzugten Ausführungsform werden Milchsäureester von aromatischen und alicyclischen Alkoholen verwendet, beispielsweise von Benzylalkohol.

Die Komponenten (D) sind übliche für Dispersionenfarben verwendete Hilfsstoffe wie Netzmittel, Dispergiermittel, Entschäumer, Rheologieadditive, Biozide, Fungizide, Algizide, Puffersubstanzen wie Natronlauge, Ammoniaklösung, Amine wie 2-Amino-2-methyl-1-propanol, Säuren wie Schwefelsäure, Salzsäure und Essigsäure.

Als Netz- und Dispergiermittel eignen sich nichtionische Tenside aus der Klasse der Alkylpolyethylenglykolether, Fettsäureethoxylate, Alkylpolyglykoside, Sorbitanesterethoxylate, Alkindiolethoxylate, Ethylenoxid und Propylenoxid-Blockcopolymere und Additionsprodukte von Ethylenoxid und Propylenoxid an Alkohole, Methyl-, Butyl- und Benzyl-endgruppenverschlossene Alkoholethoxylate und Alkylphenolethoxylayte. Weiterhin werden beispielsweise Netz- und Dispergiermittel aus der Klasse der anionischen Tenside aus der Gruppe der Natrium-, Kalium- und Ammoniumsalze von Fettsäuren, Natriumalkylbenzolsulfonate, Natriumalkylsulfonate, Natriumolefinsulfonate, Natriumpolynaphthalinsulfonate, Natriumdialkyldiphenyletherdisulfonate, Natrium-, Kalium- und
Ammoniumalkylsulfate, Natrium-, Kalium- und
Ammoniumalkylpolyethylenglykolethersulfate, Natrium-, Kalium- und Ammoniumalkylphenolpolyethylenglykolethersulfate, Natrium-, Kalium- und Ammoniummono- und dialkylsulfosuccinate und Monoalkylpolyoxethylsulfosuccinate, sowie Alkylpolyethylenglykoletherphosphorsäuremono-, di- und triester und deren Mischungen und Alkylphenolpolyethylenglykoletherphosphorsäuremono-, di- und triester und deren Mischungen, sowie deren Natrium-, Kalium- und Ammoniumsalze verwendet.

Als Dispergiermittel für anorganische Pigmente werden Homo- und Copolymere der Acrylsäure, Methacylsäure, Maleinsäure, Fumarsäure und Acryl- und Methacrylsäureester und deren Natrium-, Kalium- und Ammoniumsalze verwendet. Als Entschäumer eignen sich Mineralölentschäumer, Siliconentschäumer oder Entschäumer auf Basis von Polyalkylenglykolethern. Entschäumende Komponenten der genannten Entschäumerklassen sind hydrophobe Feststoffteilchen wie hydrophobmodifizierte Silica, Fettsäuresalze zwei- und dreiwertiger Kationen wie Aluminiumstearat und Calciumstearat, Amidwachse wie Ethylenbisstearylamid und Siliconharze.

Übliche Rheologieadditive sind Bentonite, Silica, Celluloseether, hydrophobmodifizerte Urethane und alkalilösliche Acrylatverdicker.

Die erfindungsgemäßen Dispersionsfarben enthalten üblicherweise Konservierungsmittel, um den Befall mit Mikroorganismen zu verhindern. Übliche Konservierungsstoffe sind Formaldehyd und Formaldehyd-abspaltende Verbindungen wie Dihydroxy-2,5-dioxahexan, Chlormethylisothiazolinon, Benzylisothiazolinon, Benzimidazolinon und Bronopol. Zur Verhinderung des Befalls mit Pilzen und Algen, insbesondere nach dem Aufbringen der Dispersionsfarben auf Außenwände, Fassaden, Dachsteine und Metall- und Kunststoffteile wie Regenrinnen im Außenbereich, können den Dispersionsfarben Filmkonservierungsmittel zugesetzt werden. Beispielsweise eignen sich Diuron, Carbendazim, Octylisothiazolinon, Dichloroctylisothiazolinon, Zinkpyrithion, Terbutryn und Irgarol als Filmkonservierungsmittel.

Als Puffersubstanzen werden für die erfindungsgemäßen Dispersionsfarben Säuren und Alkalien wie Natronlauge, Ammoniaklösung, Amine wie 2-Amino-2-methyl-1-propanol, Triethanolamin, Dimethylaminoethanol und Säuren wie Schwefelsäure, Salzsäure, Essigsäure und Ameisensäure verwendet.

Der erfindungsgemäßen Dispersionsfarbe können gegebenenfalls weitere Komponenten (E) zugesetzt werden. Dispersionsfarben werden vorzugsweise mit organischen und anorganischen Buntpigmenten versetzt, um einen gewünschten Farbton einzustellen.

Geeignete anorganische Buntpigmente sind Eisenoxide, Magnetite, Manganeisenoxide, Chromoxide, Ultramarin, Nickel- oder Chromantimontitanoxide, Mangantitanrutile, Cobaltoxide, Mischoxide des Cobalts und Aluminiums, Rutilmischphasenpigmente, Sulfide der seltenen Erden, Spinelle des Cobalts mit Nickel und Zink, Spinelle basierend auf Eisen und Chrom mit Kupfer Zink sowie Mangan, Bismutvanadat sowie Verschnittpigmente. Insbesondere werden die Colour Index Pigmente Pigment Yellow 184, Pigment Yellow 53, Pigment Yellow 42, Pigment Yellow Brown 24, Pigment Red 101, Pigment Blue 28, Pigment Blue 36, Pigment Green 50, Pigment Green 17, Pigment Black 11 und Pigment Black 33 verwendet.

Als organische Buntpigmente kommen Monoazo-, Disazo-, verlackte Azo-, β-Naphthol-, Naphthol AS-, Benzimidazolon-, Disazokondensations-, Azo-Metallkomplex-Pigmente und polycyclische Pigmente wie z. B. Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente oder Ruße in Betracht.

Als beispielhafte Auswahl besonders bevorzugter organischer Pigmente sind dabei Rußpigmente, wie z. B. Gas- oder Furnaceruße; Monoazo- und Disazopigmente, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Yellow 219, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS-Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 256, Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red 257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61; Diketopyrrolopyrrolpigmente, insbesondere die Colour Index Pigmente Pigment Red 254, Pigment Red 255, Pigment Red 264, Pigment Red 270, Pigment Red 272, Pigment Orange 71, Pigment Orange 73, Pigment Orange 81 zu nennen.

Mischungen von organischen mit anorganischen Pigmenten werden ebenfalls häufig verwendet.

Die erfindungsgemäßen Dispersionsfarben können darüber hinaus weitere filmbildende Komponenten enthalten, wie Silikonharze, Kaliwasserglas oder Alkydharzdispersionen.

### Beispiele

### VOC-Gehalt von Filmbildehilfsmitteln

Die erfindungsgemäßen Filmbildehilfsmittel wurden gegen übliche Filmbildehilfsmittel ausgeprüft, wie sie nach dem Stand der Technik verwendet werden.

Entscheidend für den VOC-Gehalt eines Anstrichstoffes ist der Siedepunkt der Einzelkomponenten, der einen Wert von 250 °C nicht unterschreiten soll. Die verwendeten Milchsäureester und Vergleichsubstanzen haben die in Tabelle 1 angegebenen Siedepunkte.

**Tabelle 1: Siedepunkte verwendeter Filmbildehilfsmittel**

| Beispiel | Filmbildehilfsmittel | Siedepunkt [°C] |
|---|---|---|
| 1 (V) | Dipropylenglykolmonobutylether | 231 |
| 2 (V) | Butyldiglykolacetat | 248 |
| 3 (V) | Texanol^{®} | 254 |
| 4 | 2-Ethylhexyllactat | 241 |
| 5 | Isoundecyllactat | 275 |
| 6 | C₁₂/C₁₆ Alkyllactat (natürlich) | > 275 |
| 7 | C₁₂/C₁₅ Alkyllactat (synthetisch) | > 275 |

| | | |
|---|---|---|
| Texanol^{®} ist eine Marke der Fa. Eastman und steht für Trimethylpentan-1,3-diol monoisobutyrat. | | |

Die im Labor hergestellten Milchsäureester wurden mit folgenden Reinheiten bereitgestellt. Die Prozentangaben sind Flächenprozente im Gaschromatographen.

**Tabelle 2: Zusammensetzung der Milchsäureester**

| Beispiel | Filmbildehilfsmittel | Restalkoholgehalt | Milchsäureester | Dimilchsäureester und höhere Milchsäureester |
|---|---|---|---|---|
| | | [%] | [%] | [%] |
| 4 | 2-Ethylhexyllactat | 13 | 72 | 15 |
| 5 | Isoundecyllactat | 6 | 78 | 16 |
| 6 | C₁₂/C₁₆ Alkyllactat (natürlich) | 12 | 75 | 13 |
| 7 | C₁₂/C₁₅ Alkyllactat (synthetisch) | 15 | 74 | 11 |

Bei Verwendung von Alkoholen zur Milchsäureveresterung, die einen Siedepunkt von < 250 °C aufweisen, werden Reste an nicht umgesetzten Alkohol zum VOC der Anstrichstoffe beitragen. 2-Ethylhexanol und Undecylalkohol besitzen einen Siedepunkt von < 250 °C während längerkettige Alkohole von mehr als 12 Kohlenstoffatomen einen Siedepunkt von > 250 °C besitzen.

Mindestfilmbildetemperatur von Polymerdispersionen nach Zugabe von Filmbildehilfsmitteln

Aufgabe der erfindungsgemäßen Filmbildehilfsmittel ist das Senken der Mindestfilmbildetemperatur von Polymerdispersionen, welche nach der ASTM Methode D 2354-98 bestimmt wird. Nach dieser Methode wird die wässrige Polymerdispersion auf eine temperierbare Platte ausgezogen und während der Trocknung beobachtet. Auf der temperierbaren Platte wird ein Temperaturgradient eingestellt. Je nach Trocknungstemperatur bildet die Polymerdispersion einen homogenen, transluzenten oder spröden, rissigen Film. An der Stelle, an der der Film gerade ohne Schädigungen austrocknet, wird die Mindestfilmbildetemperatur abgelesen.

Zur Bestimmung der Mindestfilmbildetemperatur (MFT) wurde eine 50 %ige, wässrige Styrol/Acrylat Polymerdispersion mit entsalztem Wasser 1:1 verdünnt und 1 - 8 % Filmbildehilfsmittel bezogen auf den Feststoff der Polymerdispersion zugegeben. Die MFT der Styrol/Acrylat Polymerdispersion ohne Filmbildehilfsmittel betrug 18 °C. Durch Zugabe der Filmbildehilfsmittel konnte die Mindestfilmbildetemperatur gesenkt werden.

**Tabelle 3: Mindestfilmbildetemperaturen**

| Konzentration | Filmbildehilfsmittel nach Beispiel [°C] | | | | | | |
|---|---|---|---|---|---|---|---|
| [%] | 1 (V) | 2 (V) | 3 (V) | 4 | 5 | 6 | 7 |
| 0 | 18,0 | 18,0 | 18,0 | 18,0 | 18,0 | 18,0 | 18,0 |
| 1,0 | 11,5 | 10,5 | 11,5 | 11,0 | 11,0 | n.b. | n.b. |
| 1,5 | 11,0 | 8,5 | 10,5 | 9,0 | 11,5 | n.b. | n.b. |
| 2,0 | 9,5 | 7,5 | 10,0 | 7,0 | 9,5 | 8,0 | 7,0 |
| 3,0 | 6,0 | 2,0 | 6,5 | 4,5 | 5,0 | n.b. | n.b. |
| 4,0 | 4,5 | 0 | 4,5 | 1,5 | 3,5 | 0 | 0 |
| 8,0 | 0 | 0 | 0 | 0 | 0 | 0 | 0 |

Eigenschaften der erfindungsgemäßen Dispersionsfarben

Die erfindungsgemäßen Filmbildehilfsmittel wurden in einer Dispersionsfarbe der folgenden Zusammensetzung eingearbeitet.

**Tabelle 4: Formulierung für Dispersionsfarben**

| Nr. | Komponente | Zusammensetzung/Eigenschaft | in Gew.-% |
|---|---|---|---|
| 1 | Wasser | | 18,5 - 16,5 |
| 2 | Tylose^{®} MH 10000 YP2 | Celluloseether, Verdicker | 0,2 |
| 3 | Emulsogen^{®} LCN 070 | Alkoholethoxylat, Netzmittel | 0,3 |
| 4 | D-Foam-R C 113 | Mineralölentschäumer | 0,2 |
| 5 | Titandioxide Kronos^{®} 2160 | Titandioxid, Weißpigment | 20,0 |
| 6 | Omyacarb^{®} 5 GU | Calciumcarbonat, Füllstoff | 20,0 |
| 7 | Ammoniak-Lösung (25 %ig) | Alkalisierung | 0,2 |
| 8 | Mowilith^{®} LDM 7714 (ca. 50 %ig) | Acrylatdispersion, Bindemittel | 40,0 |
| 9 | Tafigel^{®} PUR 40 1:9 in Wasser | Urethanverdicker | 0,4 |
| 10 | Filmbildehilfsmittel | siehe Tabelle 5 | 0 - 2,0 |
| 11 | Nipacide^{®} BIT 10 W | Benzisothiazolinon, Biozid | 0,2 |
| | Summe | | 100 |

Zunächst werden die Komponenten 1 - 4 vorgelegt und anschließend mit einer Dissolverscheibe mit den Komponenten 5 und 6 zu einer Pigmentdispersion dispergiert. Anschließend werden die Komponenten 7 - 11 unter Rühren zugegeben. Von den hergestellten Dispersionsfarben werden die Viskosität und das Äußere nach 1 Woche Lagerung bei Raumtemperatur beurteilt, wobei keine Synerese beobachtet wurde. Von den Dispersionsfarben werden Farbaufstriche auf Kontrastpapier mit einer Nassschichtdicke von 120 µm gezogen und der Gesamtfarbabstand dE mit einem Spektrofotometer bestimmt. Zur Bestimmung der Nassabriebfestigkeit wurden Farbfilme 28 Tage bei 23 °C und 50 % Luftfeuchtigkeit gelagert und anschließend der Nassabrieb nach 40 Scheuerzyklen bestimmt.

Es ist bevorzugt, dass die Viskosität der Dispersionsfarbe mit Filmbildehilfsmittel nicht um mehr als 10 % geringer ist als die Viskosität der Dispersionsfarbe ohne Filmbildehilfsmittel. Das Deckvermögen und die Nassabriebfestigkeit sollten durch das Filmbildehilfsmittel möglichst wenig verringert werden.

**Tabelle 5: Eigenschaften der Dispersionsfarben**

| Beispiel | | Versuch | Äußeres | Viskosität [mPa·s] | Deck-vermögen [dE] | Nassabriebfestigkeit [mg/m²] |
|---|---|---|---|---|---|---|
| 8 | (V) | Ohne Filmbildehilfsmittel | OK | 1866 | 1,26 | 20,25 |
| 9 | | 10 g/kg Isoundecyllactat | OK | 1798 | 1,23 | 23,18 |
| 10 | | 20 g/kg Isoundecyllactat | OK | 1740 | 1,26 | 19,08 |
| 11 | | 10 g/kg 2-Ethylhexyllactat | OK | 1782 | 1,24 | - |
| 12 | | 20 g/kg 2-Ethylhexyllactat | OK | 1734 | 1,23 | - |
| 13 | | 20 g/kg C₁₂/C₁₆ Alkyllactat (natürlich) | OK | 1834 | 1,24 | 19,88 |
| 14 | | 20 g/kg C₁₂/C₁₅ Alkyllactat (synthetisch) | OK | 1822 | 1,26 | 20,90 |
| 15 | (V) | 20 g/kg Texanol | OK | 1680 | 1,19 | 17,43 |
| 16 | (V) | 20 g/kg Dipropylenglykol-monobutylether | OK | 1490 | 1,89 | - |
| 17 | (V) | 20 g/kg Butyldiglykolacetat | OK | 1569 | 2,09 | 20,79 |

Insgesamt zeigen die erfindungsgemäßen Verbindungen im Vergleich mit üblich verwendeten Filmbildehilfsmitteln ähnlich gute Ergebnisse.

### Verdunstungszahl der erfindungsgemäßen Verbindungen

Die Verdunstungszahl ist eine Kenngröße für die Flüchtigkeit einer organischen Verbindung und gibt das Verhältnis der Verdunstungszeit der Probe zur Verdunstungszeit einer Vergleichssubstanz, z. B. Butylacetat wieder. Dazu werden 0,3 g der Probe auf ein Filterpaper geträufelt und gleichmäßig in einem Kreis verteilt. Anschließend wird bei Raumtemperatur beobachtet, nach welcher Zeit die organische Verbindung verdunstet ist. Das Filterpaper wird gegen eine Lichtquelle gehalten und beobachtet, nach welcher Zeit sich die dunklen, nassen Stellen verflüchtigt haben.

**Tabelle 6: Verdunstungszahlen der Filmbildehilfsmittel**

| Beispiel | | Probe | Verdunstungszeit [Min.] | Verdunstungszahl |
|---|---|---|---|---|
| 18 | (V) | Butylacetat | 5 | 1 |
| 19 | (V) | Butyldiglykolacetat | 1010 | 202 |
| 20 | (V) | Texanol | 1170 | 234 |
| 21 | | Undecyllactat | > 3580 | >716 |

Die Verdunstungszahl der Milchsäureester mit längerkettigen Alkoholen als 11 Kohlenstoffatome zeigen eine noch höhere Verdunstungszahl als Undecyllactat, so dass der Versuch nach 3580 Minuten abgebrochen wurde.

### VOC-Gehalt der erfindungsgemäßen Dispersionsfarben

Zur Bestimmung des Gehaltes an flüchtigen organischen Verbindungen (VOC-Gehalt) gemäß ISO 11890-2 (Richtlinie 2004/42/EC) werden die erfindungsgemäßen Dispersionsfarben auf eine polare Säule eines Gaschromatographen gegeben und gegen Diethyladipat mit einem Siedepunkt von 251 °C als Markersubstanz verglichen. Aufgrund von Verunreinigungen der eingesetzten Rohstoffe werden in der Dispersionsfarbe ohne Filmbildehilfsmittel VOC-Gehalte von 0,2 % Massenprozenten gefunden.

**Tabelle 6: VOC-Gehalte der Dispersionsfarben**

| Beispiel | | Probe | VOC-Gehalt [%, m/m] Rt < Rt(Diethyladipat) |
|---|---|---|---|
| 22 | (V) | Ohne Filmbildehilfsmittel | 0,2 % Σ "Unbekannt" |
| 23 | (V) | 2 % Dipropylenglykolmonobutylether (DPGBE) | 0,2 % Σ "Unbekannt" + 2,0 % DPGBE |
| 24 | (V) | 2 % Butyldiglykolacetat | 0,2 % Σ "Unbekannt" + 1,9 % Butylglykolacetat |
| 25 | (V) | 2 % Texanol | 0,2 % Σ "Unbekannt" + 2,0 % Texanol |
| 26 | | 2 % Isoundecyllactat | 0,2 % Σ "Unbekannt" + 0,1 % Isoundecanol |
| 27 | | 2 % C₁₂/C₁₆ Alkyllactat (natürlich) | 0,2 % Σ "Unbekannt" |
| 28 | | 2 % C₁₂/C₁₅ Alkyllactat (synthetisch) | 0,2 % Σ "Unbekannt" |

Durch die erfindungsgemäßen Filmbildehilfsmittel können wässrige Dispersionsfarben mit deutlich niedrigerem VOC-Gehalt hergestellt werden. Alle Vergleichssubstanzen wurden mittels Gaschromatographie als VOCs identifiziert. Isoundecyllactat hat mit einem Siedepunkt von 275 °C und einer Verdunstungszahl von > 700 eine deutlich geringere Flüchtigkeit und gleichzeitig eine gleichwertige oder überlegene Wirkung als Filmbildehilfsmittel gegenüber den üblichen Vergleichssubstanzen. Bei Verwendung von Milchsäureestern von Alkoholen, die einen Siederpunkt von > 250 °C zeigen, wird der Anteil von zu den VOC hinzugezählten Komponenten noch weiter gesenkt, so dass diese erfindungsgemäßen Milchsäureester überhaupt nicht zur Erhöhung des VOC-Gehalts des Anstrichstoffes beitragen.

## Patentansprüche

1. Dispersionsfarben, enthaltend Wasser und
(A) mindestens eine Polymerdispersion, welche Homo- oder Copolymere von olefinisch ungesättigten Monomeren umfasst,
(B) mindestens ein anorganisches Pigment,
(C) mindestens eine Verbindung der Formel (I) 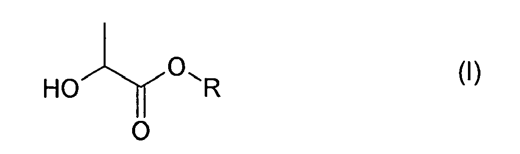 worin R ein Kohlenwasserstoffrest mit 6 bis 30 Kohlenstoffatomen ist.

2. Dispersionsfarben nach Anspruch 1, enthaltend mindestens einen weiteren Bestandteil ausgewählt aus Alkoholen R-OH, Milchsäure und Polymilchsäureestern der Formel (II) 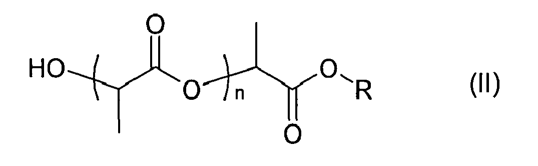 worin R ein Kohlenwasserstoffrest mit 6 bis 30 Kohlenstoffatomen und n eine Zahl von 1 bis 5 sind.

3. Dispersionsfarben nach Anspruch 1 oder 2, enthaltend Milchsäureester der Formel (I), welche Mischester von Alkoholen R-OH mit mindestens 2 unterschiedlichen Kohlenstoffkettenlängen R sind.

4. Dispersionsfarben nach einem oder mehreren der Ansprüche 1 bis 3, enthaltend Milchsäureester der Formel (I) mit einem Siedepunkt von > 250 °C.

5. Dispersionsfarben nach einem oder mehreren der Ansprüche 1 bis 4, enthaltend Milchsäureester der Formel (I) von Alkoholen R-OH, wobei die Alkohole R-OH eine Siedepunkt von > 250 °C aufweisen.

6. Dispersionsfarben nach einem oder mehreren der Ansprüche 1 bis 5, enthaltend Milchsäureester von Alkoholen R-OH, wobei R 12 bis 22 Kohlenstoffatome umfasst.

7. Dispersionsfarben nach einem oder mehreren der Ansprüche 1 bis 6, enthaltend Milchsäureester von Alkylalkoholen R-OH mit mindestens einem tertiären Kohlenstoffatom im Alkylrest R.

8. Dispersionsfarben nach einem oder mehreren der Ansprüche 1 bis 7, enthaltend Milchsäureester von synthetischen, verzweigten Oxoalkoholen oder Mischungen von Oxoalkoholen mit 10 bis 18 Kohlenstoffatomen, die mindestens 10 Gew.-% eines Alkohols R-OH mit mindestens einem tertiären Kohlenstoffatom pro Kohlenstoffkette enthalten.

9. Dispersionsfarben nach einem oder mehreren der Ansprüche 1 bis 8, enthaltend Milchsäureester von Alkylalkoholen R-OH mit 2 bis 4 tertiären Kohlenstoffatomen im Alkylrest R.

10. Dispersionsfarben nach einem oder mehreren der Ansprüche 1 bis 5, enthaltend Milchsäureester von einfach oder mehrfach ungesättigten Fettalkoholen.

11. Dispersionsfarben nach einem oder mehreren der Ansprüche 1 bis 6, enthaltend Milchsäureester von aromatischen und alicyclischen Alkoholen R-OH.

12. Dispersionsfarben nach einem oder mehreren der Ansprüche 1 bis 11, enthaltend mindestens eine Polymerdispersion, welche aus olefinisch ungesättigten Monomeren ausgewählt aus Vinylmonomeren, arylsubstituierten Olefinen, olefinisch ungesättigten Carbonsäureestern, olefinisch ungesättigten Dicarbonsäureestern, olefinisch ungesättigten Carbonsäuren und Dicarbonsäuren, olefinisch ungesättigten Sulfonsäuren und Phosphonsäuren, olefinisch ungesättigten Aminen, Ammoniumsalzen, Nitrilen und Amiden durch Polymerisation erhältlich ist.

13. Dispersionsfarben nach Anspruch 12, enthaltend mindestens eine Polymerdispersion, welche durch Polymerisation mindestens eines Monomers aus der Gruppe bestehend aus Vinylacetat, Vinylpropionat, Vinylether der Isononansäure oder der Isodecansäure, Styrol, Stilben, Methylacrylat, Ethylacrylat, Propylacrylat, n-Butylacrylat, i-Butylacrylat, Pentylacrylat, Hexylacrylat, 2 Ethylhexylacrylat, Hydroxyethylacrylat, Methylmethacrylat, Ethylmethacrylat, Propylmethacrylat, n-Butylmethacrylat, i-Butylmethacrylat, Pentylmethacrylat, Hexylmethacrylat, 2 Ethylhexylmethacrylat, Hydroxyethylmethacrylat, Dimethylmaleinat, Diethylmaleinat, Dipropylmaleinat, Dibutylmaleinat, Dipentylmaleinat, Dihexylmaleinat und Di-2-ethylhexylmaleinat, Acrylsäure, Methacrylsäure, Itaconsäure, Maleinsäure, Fumarsäure, die Natrium-, Kalium- und Ammoniumsalze dieser Säuren, (Meth)Acrylamidomethylpropansulfonsäure und ihre Salze, Allylsulfonsäure und ihre Salze, (Meth)Acryloyloxethylphosphonsäure und ihre Salze, Dimethylaminoethyl(meth)acrylat, (Meth)Acryloyloxethyltrimethylammoniumhalide, Acrylnitril, N-Methyl(meth)acrylamid, N-Ethyl(meth)acrylamid, N-Propyl(meth)acrylamid, N-Methylol(meth)acrylamid, Vinylmethylacetamid erhältlich sind.

14. Dispersionsfarben nach einem oder mehreren der Ansprüche 1 bis 13, enthaltend 1 bis 95 Gew.-% (A), 1 bis 70 Gew.-% (B) und 0,01 bis 10 Gew.-% (C).

15. Dispersionsfarben nach einem oder mehreren der Ansprüche 1 bis 13, enthaltend mindestens 8 Gew.-% Wasser.

16. Dispersionsfarben nach einem oder mehreren der Ansprüche 1 bis 15, enthaltend Wasser ad 100 Gew.-%.

17. Dispersionsfarben nach einem oder mehreren der Ansprüche 1 bis 16, enthaltend 0,01 bis 10 Gew.-% (D) und 1 bis 70 Gew.-% (E).

18. Dispersionsfarben nach einem oder mehreren der Ansprüche 1 bis 13 und/oder 15 bis 17, worin 1 bis 87 Gew.-% (A), 1 bis 70 Gew.-% (B) und 0,01 bis 10 Gew.-% (C) enthalten sind.

19. Verwendung einer Verbindung der Formel (I) 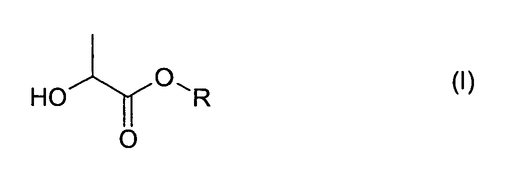 worin R ein Kohlenwasserstoffrest mit 6 bis 30 Kohlenstoffatomen ist, als Filmbildehilfsmittel für wässrige Dispersionsfarben, welche
(A) mindestens eine Polymerdispersion, welche Homo- oder Copolymere von olefinisch ungesättigten Monomeren umfasst,
(B) mindestens ein anorganisches Pigment, enthalten.
